Europäisches Patentamt

European Patent Office

Office européen des brevets

(11) Publication number : **0 490 656 A2**

# EUROPEAN PATENT APPLICATION

(21) Application number : **91311521.8**

(22) Date of filing : **11.12.91**

(51) Int. Cl.⁵ : **G06K 7/10**

(30) Priority : **12.12.90 US 628180**

(43) Date of publication of application :
**17.06.92 Bulletin 92/25**

(84) Designated Contracting States :
**DE FR GB**

(71) Applicant : **NCR CORPORATION**
**World Headquarters**
**Dayton, Ohio 45479 (US)**

(72) Inventor : **Elko, Michael Joseph**
**108 Warren Road**
**Ithaca, New York 14850 (US)**

(74) Representative : **Robinson, Robert George**
**International Patent Department NCR Limited**
**915 High Road North Finchley**
**London N12 8QJ (GB)**

(54) **Support member for a portable optical scanner.**

(57) The invention provides for a support member (20) for a portable bar code scanner (18) which comprises a hood member (20) having one end secured to a scanning head portion (22) of the scanner (18). The other end of the hood member (20) has an inclined edge portion (24) for supporting the scanner (18) when positioned on a supporting surface (26). The inclined edge portion (24) is configured such that the optical axis of the head portion (22) makes any angle to the vertical which corresponds to a correct scanning angle when the scanner (18) is supported in a horizontal surface.

EP 0 490 656 A2

FIG. 2

The present invention relates to a support member for a portable optical scanner and in particular, but not exclusively, to a support member for a portable bar code scanning device.

In present-day merchandising point-of-sale operations, data pertaining to the purchase of a merchandise item is obtained by reading data encoded indicia such as a bar code label printed on or attached to the merchandise item. In order to standardize the bar codes used in various point-of-sales checkout systems, the grocery industry has adopted a uniform product code (UPC) which is in the form of a bar code. Reading systems which have been constructed to read this type of bar code include hand-held scanners which are moved across the bar code to generate electrical signals representing the bar coded data. United States patents 3 964 022, 3 238 501 and 4 457 016 disclose optical scanner devices having means for supporting the device when in use, relative to a data bearing surface. However, such support means can not support the devices in a "ready to use" orientation and, in any case, the support means are disadvantageous in that the devices are not readily oriented relative to the data bearing surface label at an angle sufficient to eliminate any direct reflection of the radiation beam and any ambient light back into the photodetector in the scanner which would interfere with the reading of the label.

The present invention seeks to provide a support means for a portable optical scanner by means of which the scanner can be supported, prior to use, in a stable manner and in an orientation which corresponds to the optimum orientation of the device when in use.

According to the present invention there is provided a portable optical scanner including a head portion having an optical axis along which scanning radiation is projected in operation from said head portion, characterized by a hollow cover member extending along said axis and having a first end secured to said head portion, the other end of said cover member being configured to engage with a horizontal support surface for the purpose of supporting said scanner on said surface with said axis being at an angle to the vertical corresponding to a correct scanning angle.

It should be understood that by a correct scanning angle is meant an angle which said optical axis makes with the vertical for correct scanning of horizontally positioned coded symbols.

The invention also has the advantage that a hood or hollow cover member for a bar code scanning apparatus can be provided which will support the scanning apparatus on a supporting surface at a predetermined reading angle.

The invention has the advantage of providing a hood or hollow cover member for a portable bar code scanning apparatus which is simple in construction and therefore low in cost.

The invention is described further hereinafter by way of example only, with reference to the accompanying drawings in which:-

Fig. 1 is a side view of a portable optical bar code scanning apparatus which includes a support member embodying the present invention and illustrating the scanning apparatus positioned on a supporting surface at an angle which is the proper angle for reading a bar code label;

Fig. 2 is a partial side sectional view of the scanning apparatus of Fig. 1 showing how the support member is attached to the head portion of the scanning apparatus;

Fig. 3 is a rear elevational view of the support member of the present invention;

Fig. 4 is a top elevational view of the support member of the present invention;

Fig, 5 is a front elevational view of the support member of the present invention;

Fig. 6 is a bottom elevational view of the support member of the present invention.

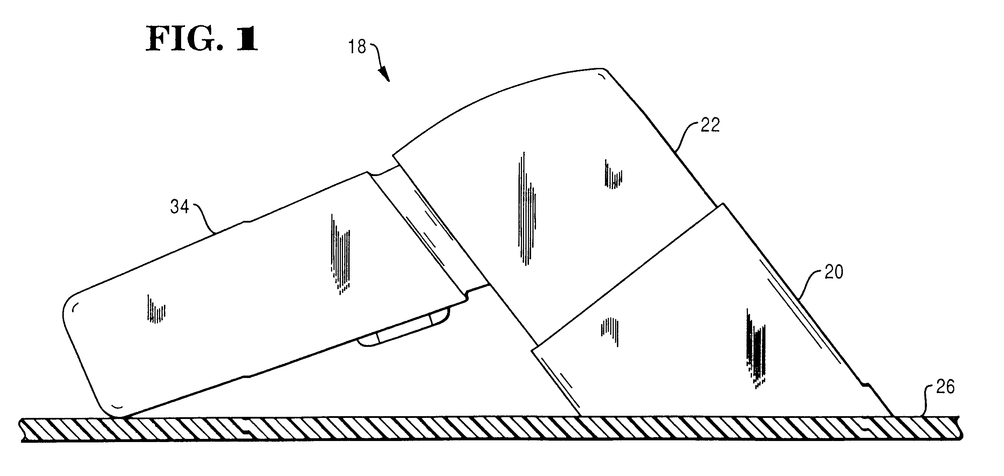

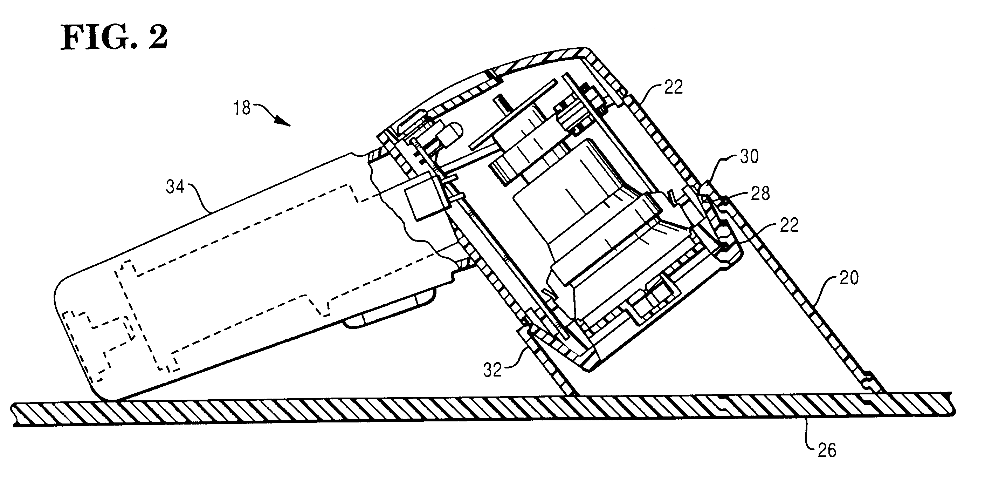

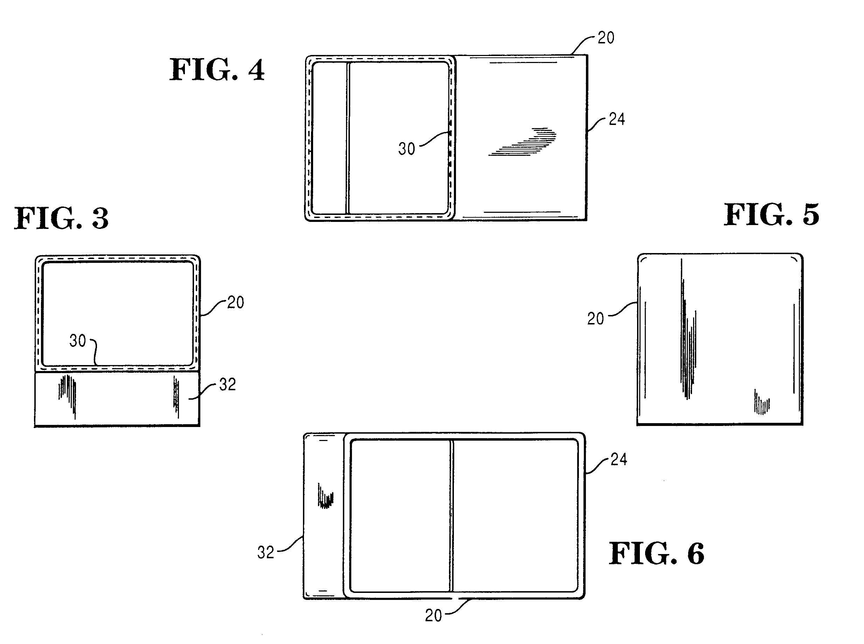

Referring now to Fig. 1, there is shown a side view of a portable bar code scanning device 18 on which is mounted a hood member 20 consisting of a hollow rectangular shaped housing member whose interior dimensions conform to the outer circumferential dimension of a head portion 22 (Fig. 2) of the scanning apparatus 18. The configuration of the front edge 24 (Fig. 6) of the hood member recedes from the top edge to the bottom edge, as viewed in Figs. 1 and 2, so as to position the scanning head at an angle of between fifteen and twenty degrees on a supporting surface 26 when placed on the surface. This angle is the most desirable reading angle for scanning a bar code label since it minimizes the amount of ambient light which can be reflected back into the scanning apparatus thereby interfering with the reading of the bar code label. It will be seen that providing the scanning apparatus 18 with the hood member 20 having the receding front edge configuration tends to force the operator to read a bar code label at approximately the same angle when the scanning apparatus 18 is being moved past the bar code label thus increasing the chances of carrying out a valid read operation.

Referring now to Fig. 2, there is shown a partial sectional view of the head portion 22 of the scanning apparatus 18 and the hood member 20. The head portion 22 includes a circumferentially extending recessed portion 28 within which is positioned a rib portion 30 extending along the inner surface of the rear end portion 32 of the hood member 20. The hood member 20 is constructed of any type of plastic material which is sufficiently pliable to allow the rib portion 30 of the hood member to be inserted within the recessed portion 28 of the scanning apparatus 18 for attaching the hood member to the scanning apparatus but rigid enough to support the scanning apparatus on the surface 26.

When the operator places the scanning apparatus 18 on the surface 26, the apparatus will be supported by the hood member 20 and the handle portion 34 of the scanning apparatus 18. It will be seen from Figs. 1 and 2 that, when in this supported position, the handle portion 34 is oriented so as to be easily grasped preparatory to scanning a bar code label. It will further be seen that the construction of the hood member of the present invention provides a solid foundation for the scanning apparatus when positioned on the surface 26 eliminating any tendency to be toppled if accidentally hit by the operator.

## Claims

1. A portable optical scanner including a head portion (22) having an optical axis along which scanning radiation is projected in operation from said head portion, characterized by a hollow cover member (20) extending along said axis and having a first end secured to said head portion (22), the other end of said cover member being configured to engage with a horizontal support surface (26) for the purpose of supporting said scanner (18) on said surface (26) with said axis being at an angle to the vertical corresponding to a correct scanning angle.

2. A scanner according to claim 1, characterized in that said optical axis is orientated at an angle of between 15° to 20° to the vertical when said scanner (18) is supported at the surface (26).

3. A scanner according to claim 1 or 2, characterized in that said hollow cover member (20) comprises a tubular member having an end surface (24) for engaging said surface (26) and inclined relative to the longitudinal axis of said tubular member (20) so as to provide for the support at the correct scanning angle.

4. A scanner according to claim 3, characterized in that said hollow cover member (20) is resilient and is secured to said head portion (22) by way of engagement means (30) received in a recess (28) in the scanner (20) surface.

5. A scanner according to claim 5, characterized in that said engagement means (30) extend around an inner peripheral region of said hollow cover member (20).

6. A scanner according to any preceding claim, characterized in that it is arranged to be free standing in the surface (26) and supported thereon by a handle portion (34) and said hollow cover member (20).

FIG. 1

EP 0 490 656 A2

# FIG. 2

FIG. 3

FIG. 4

FIG. 5

FIG. 6